# FASCICULE DE BREVET EUROPEEN

(11) **EP 0 841 848 B1**
(45) Date de publication et mention de la délivrance du brevet: **28.04.1999**
(21) Numéro de dépôt: 96927079.2
(22) Date de dépôt: 25.07.1996
(51) Int. Cl.: A01G 31/00

(54) **SUPPORT MODULAIRE DE CULTURE HORS SOL**
MODULARES SUBSTRAT FÜR ERDLOSE KULTUR
MODULAR SOILLESS GROWTH MEDIUM

(30) Priorité: 28.07.1995 FR 9509399
(43) Date de publication de la demande: 20.05.1998
(73) Titulaire: Guillemain, Jean-Sylvain, 18120 Lury-sur-Arnon (FR); Guillemain, Françoise, 18120 Lury-sur-Arnon (FR)
(72) Inventeur: GUILLEMAIN, Jean-Sylvain, F-18120 Lury-sur-Arnon (FR); GUILLEMAIN, Françoise, F-18120 Lury-sur-Arnon (FR); BIBOLLET, Jean-Claude, F-74230 Thones (FR)
(74) Mandataire: Poncet, Jean-François
(86) Numéro de dépôt international: FR9601172
(87) Numéro de publication internationale: WO9704641

(56) Documents cités:
- EP-A- 0 230 799
- WO-A-94/22287
- FR-A- 2 402 401
- FR-A- 2 641 442
- FR-A- 2 680 948
- FR-A- 2 712 140
- PATENT ABSTRACTS OF JAPAN vol. 13, no. 556 (C-664) & JP,A,01 231821 (NISSHIN SANGYO)

## Description

### DOMAINE TECHNIQUE DE L'INVENTION

La présente invention concerne les procédés de culture hors sol de plantes à l'aide de supports de culture en forme de sacs dans lesquels on enferme un substrat de culture pouvant être enrichi par des substances nutritives. Les sacs sont ainsi posés les uns à côté des autres, pour constituer un tapis sur lequel les plantes sont susceptibles de se développer.

Les sacs habituellement utilisés sont en matière plastique imperméable, comme décrit par exemple dans les documents FR-A-2 402 401 ou EP-A-0 230 799.

L'une des utilisations possibles de tels tapis est la réalisation de massifs floraux décoratifs dans les villes. Il est alors nécessaire de cacher la surface supérieure des sacs par un paillage, c'est-à-dire par le dépôt d'une couche supérieure de décor. Le problème est que la couche supérieure de paillage tend à glisser sur la surface lisse en matière plastique du sac et, sous l'action progressive de l'eau d'arrosage ou de pluie et du vent, les sacs se trouvent tôt ou tard découverts, ce qui nuit à l'esthétique du tapis.

On connaît également, du document FR-A-2 680 948, un procédé de production industrielle de tapis de culture hors sol, dans lequel une machine réalise, sur place, un ensemble de manchons constitués chacun à partir de bandes de matériau flexible solidarisées selon leurs bords latéraux et enfermant un substrat de culture. Ce document enseigne de découper les manchons à la dimension désirée, et de les mettre ensuite en place à l'endroit désiré. On comprend toutefois que le transport et la mise en place sur un site sont difficiles en raison de la longueur des manchons. Les manchons n'étant pas fermés à leurs extrémités laissent s'écouler une partie du substrat non retenu par les racines lors du transport. La couche de paillage est également facilement balayée par le vent et emportée par les eaux de ruissellement car elle n'est pas fixée sur le tapis qui est très lisse. Le matériau flexible utilisé laisse passer la lumière et les pousses, et ne s'oppose pas à la croissance prématurée des mauvaises herbes. Ce procédé nécessite en outre de disposer d'un outillage cher, lourd, encombrant et difficile à utiliser. Il apparaît pratiquement impossible de préfabriquer les tapis par ce procédé, de façon économique. Il en est de même avec les manchons continus du document WO-A-94 22287.

### EXPOSE DE L'INVENTION

L'invention se propose ainsi de concevoir un nouveau support modulaire de culture hors sol, à base de sacs manipulables contenant un substrat de culture et qui assure par lui-même une bonne retenue ultérieure du paillage ou de la couche de décor déposée sur le support lors de l'utilisation. Les sacs doivent être aisément manipulables, de façon à pouvoir être préfabriqués et ensuite transportés jusqu'au site d'utilisation.

La difficulté est que la retenue de la couche de décor n'est efficace que lorsque la surface du support de culture est très irrégulière, avec de préférence un contact direct entre le paillage et le substrat de culture, alors que la manipulation et le transport du sac nécessitent au contraire de disposer d'une paroi continue, et donc lisse, empêchant l'échappement des particules de substrat de culture ce qui exclut a priori un contact direct ultérieur entre le paillage et le substrat de culture intérieur.

Pour concilier ces deux exigences contradictoires, l'invention prévoit un sac de structure particulière contenant un substrat de culture:
- le sac comprend une paroi inférieure en un matériau retenant le substrat de culture lors des manipulations et du transport,
- le sac comprend une paroi supérieure solidarisée à la paroi inférieure selon le pourtour du sac et formée d'au moins deux matériaux associés comprenant un premier matériau conformé en grosses mailles susceptible d'assurer une bonne tenue d'une couche de décor ultérieurement déposée sur le support, et un second matériau rapidement biodégradable sous l'action de l'eau et obturant temporairement les trous desdites mailles du premier matériau pour retenir temporairement le substrat de culture lors des manipulations et du transport du sac.

Le second matériau peut par exemple être choisi pour être dégradé à l'issue d'une durée de 10 à 15 jours de culture.

Dans un premier mode de réalisation, la paroi supérieure est formée d'au moins deux feuilles superposées, éventuellement collées l'une à l'autre, comprenant une première feuille à grosses mailles constituée dudit premier matériau et une seconde feuille constituée dudit second matériau rapidement biodégradable.

Selon une première variante, la première feuille forme la couche externe de paroi supérieure. Dans ce cas, la première feuille participe au maintien mécanique efficace de la seconde feuille, oui est généralement plus fragile car biodégradable.

Selon une seconde variante, la seconde feuille forme la couche externe de paroi supérieure. On favorise, dans ce cas, l'accessibilité des inscriptions portées sur la seconde feuille, par exemple pour le repérage des zones d'implantation.

La seconde feuille peut avantageusement être en papier, de préférence en papier opaque qui inhibe la croissance prématurée des mauvaises herbes pendant la première période d'utilisation du substrat, jusqu'à dégradation du papier. Eventuellement, la paroi supérieure peut être imprégnée d'un engrais transférable au substrat de culture par l'eau d'arrosage ou de ruissellement.

Selon un autre mode de réalisation, le premier matériau conformé en grosses mailles est enrobé avec le second matériau rapidement biodégradable, de sorte que la paroi supérieure peut être formée d'une seule feuille.

Le sac peut avantageusement être compartimenté, pour limiter le déplacement du substrat de culture lors des manipulations du sac. On notera qu'une telle structure compartimentée présente des avantages spécifiques et peut être utilisée tant avec des parois supérieures monomatériau qu'avec des parois supérieures bi-matériau.

L'invention prévoit un procédé de culture hors sol dans lequel on utilise de tels supports de culture sous forme de sacs manipulables indépendamment les uns des autres avant et après la pousse des plantes.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue de dessus d'un sac de support modulaire de culture hors sol selon un mode de réalisation de l'invention ;
- la figure 2 est une coupe transversale à plus grande échelle selon le plan A-A de la figure 1 ;
- la figure 3 est une coupe transversale similaire de la figure 2, selon un autre mode de réalisation de l'invention ; et
- la figure 4 illustre l'utilisation du support modulaire de culture hors sol selon l'invention.

### DESCRIPTION DES MODES DE REALISATION PREFERES

Dans le mode de réalisation illustré sur les figures, le support de culture hors sol selon l'invention est réalisé à partir de sacs destinés à être posés les uns à côté des autres sur le sol.

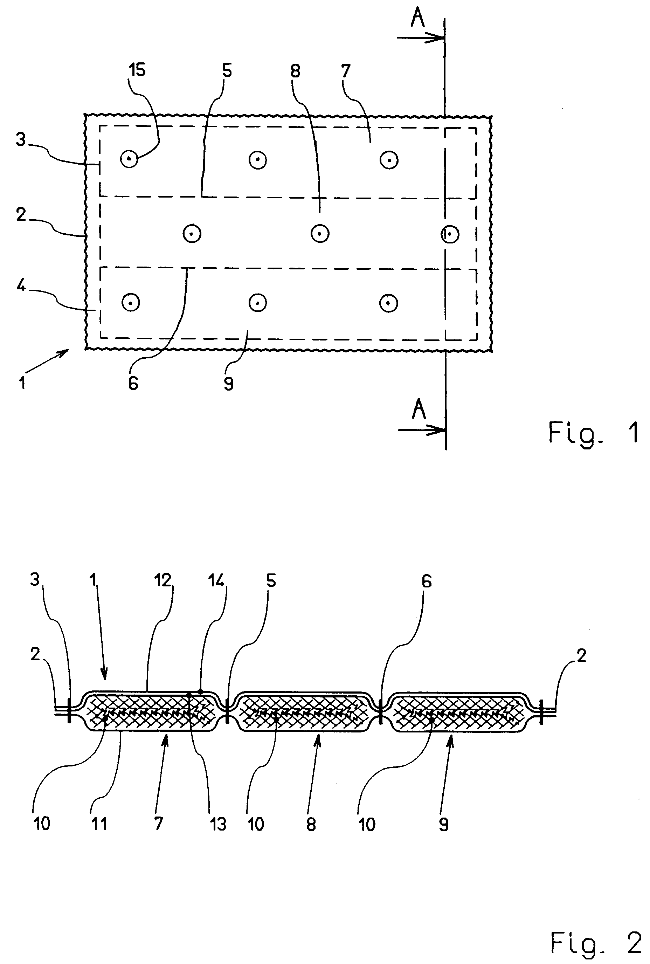

Dans la réalisation illustrée sur la figure 1, le sac 1 présente un pourtour 2 rectangulaire, formé d'une paroi supérieure et d'une paroi inférieure solidarisées l'une à l'autre selon une ligne de solidarisation 3 périphérique légèrement en retrait du pourtour 2 pour former une bavette 4. A l'utilisation, la bavette 4 facilite les manutentions en constituant une portion aisément préhensible. En outre, la bavette 4 assure un recouvrement partiel des sacs adjacents posés sur le sol, s'opposant à la croissance d'herbe entre les sacs.

Les parois supérieure et inférieure sont en outre solidarisées l'une à l'autre selon deux lignes de solidarisation longitudinales intermédiaires 5 et 6, délimitant trois compartiments respectifs 7, 8 et 9 de largeurs sensiblement égales. Le sac peut par exemple présenter une longueur d'environ un mètre, une largeur d'environ cinquante centimètres. La présence des compartiments allongés dans le sens longitudinal, et relativement étroits dans le sens transversal, facilite la manipulation en limitant le déplacement transversal du substrat de culture contenu dans le sac 1. La largeur des compartiments 7-9 correspond sensiblement à l'intervalle approprié entre des rangées de plants. La longueur peut être modifiée selon les besoins, et peut devenir inférieure à la largeur. On peut aussi concevoir, dans certaines applications, d'ajouter des lignes de solidarisation transversales.

Les sacs tels que représentés sur les figures, avec une longueur d'environ un mètre et une largeur d'environ cinquante centimètres, présentent un bon compromis pour la manipulation, car l'utilisateur peut les porter en se plaçant face à un grand côté longitudinal avec ses avant bras sous deux portions intermédiaires de sa face inférieure, de sorte que le sac n'a pas tendance à se plier de façon exagérée.

Comme on le voit sur la figure 2, le sac 1 contient, dans chacun de ses compartiments 7, 8 et 9, un substrat de culture 10, constitué par exemple d'un broyage d'écorce de pin amendée. Le sac 1 comprend une paroi inférieure 11 en un matériau retenant le substrat de culture 10 lors des manipulations et du transport du sac 1. Le matériau de paroi inférieure 11 peut avantageusement être perméable aux racines par exemple en matériau tissé ou non tissé, à base de polypropylène, ou à base d'un polyamide qui se désagrège progressivement avec le temps à la lumière.

Le sac 1 comprend une paroi supérieure 12 solidarisée à la paroi inférieure 11 selon le pourtour 2 du sac, de préférence selon la ligne de solidarisation 3 légèrement en retrait du pourtour 2. Dans le mode de réalisation illustré, la paroi supérieure 12 est formée d'au moins deux feuilles superposées comprenant une première feuille 13 en un matériau à grosses mailles, et une seconde feuille 14 rapidement biodégradable sous l'action de l'eau. La première feuille 13 est susceptible d'assurer une bonne tenue mécanique d'une couche de décor ultérieurement déposée sur le support. La seconde feuille 14 est adaptée pour retenir temporairement les particules fines de substrat de culture 10 lors des manipulations et du transport du sac 1.

Dans le mode de réalisation illustré sur la figure 2, la seconde feuille 14 forme la couche externe de paroi supérieure 12.

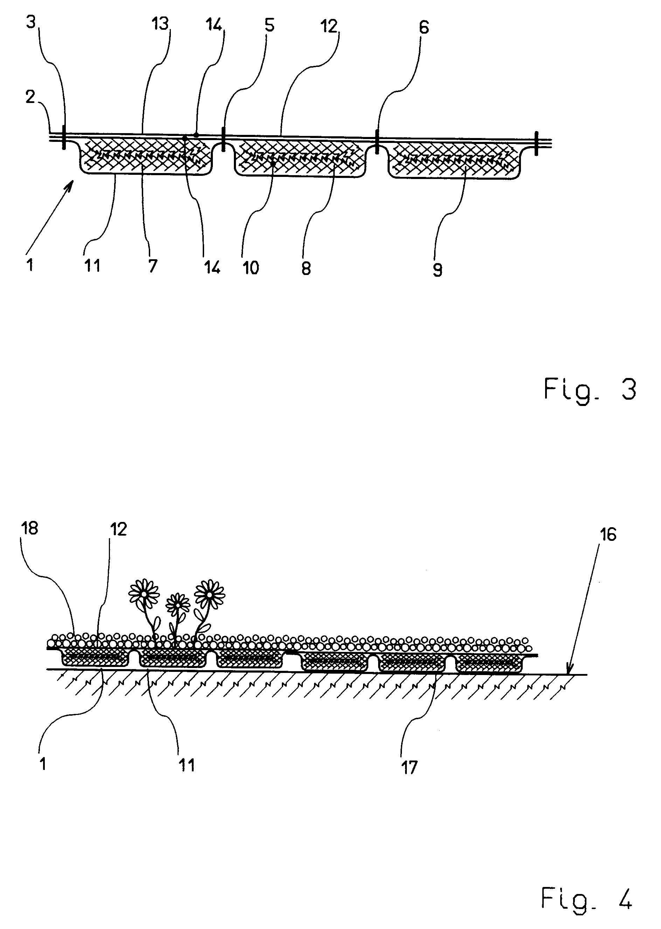

En alternative, comme illustré sur la figure 3, la première feuille 13 forme la couche externe de paroi supérieure 12.

La seconde feuille 14 peut avantageusement être en papier, de préférence en papier opaque tel qu'un papier kraft à 60 g/m² environ.

La face externe de paroi supérieure 12 peut comporter des repères d'implantation tels que le repère 15 illustré sur la figure 1, selon un ou plusieurs maillages. On peut prévoir par exemple à la fois une première série de cinq repères par sac, non représentés sur la figure, réalisant dix repères d'implantation par mètre carré, et une seconde série de neuf repères par sac, comme représentés, réalisant dix-huit repères d'implantation par mètre carré.

Dans le mode de réalisation de la figure 2, les parois supérieure 12 et inférieure 11 ont sensiblement la même largeur. Il en résulte que les lignes de solidarisation longitudinales intermédiaires 5 et 6 se placent sensiblement dans le plan horizontal médian du sac, c'est-à-dire au milieu de l'épaisseur du sac.

De préférence, l'une des parois supérieure 12 ou inférieure 11 est plus large et éventuellement plus longue, de sorte que les lignes de solidarisation telles que les lignes 3, 5 et 6 se placent sensiblement dans le plan de la paroi la moins large.

Ainsi, dans le mode de réalisation de la figure 3, on prévoit avantageusement que la paroi inférieure 11 est plus large et éventuellement plus longue que la paroi supérieure 12, de sorte que les lignes de solidarisation longitudinales intermédiaires 5 et 6 se placent sensiblement dans le plan de la paroi la moins large, c'est-à-dire de la paroi supérieure 12, constituant une surface supérieure continue du sac.

En alternative, on peut prévoir une paroi supérieure 12 plus large et éventuellement plus longue que la paroi inférieure 11, les lignes de solidarisation longitudinales intermédiaires 5 et 6 se plaçant alors selon le plan inférieur du sac.

Dans les deux cas, on favorise la réalisation d'une épaisseur sensiblement constante de substrat 10, c'est-à-dire une épaisseur qui n'est pas réduite au voisinage des lignes de solidarisation longitudinales périphériques 3 et augmentée au centre du sac 1. Cette épaisseur sensiblement constante évite le ruissellement rapide de l'eau d'arrosage en périphérie du sac 1, et favorise ainsi son étalement sur toute la surface supérieure du sac 1 et son absorbtion dans le substrat 10. La présence des lignes de solidarisation intermédiaires 5 et 6, qui tendent à constituer des gouttières sur la surface supérieure du sac 1, favorise également la retenue de l'eau, notamment en orientant les gouttières transversalement à la pente lors d'une utilisation sur sol en pente.

Pour parfaire la régularité d'épaisseur du substrat de culture contenu à l'intérieur du sac 1, il pourra être avantageux de faire passer ledit sac 1 entre deux rouleaux éventuellement vibrants tourillonnant en sens inverses autour d'axes parallèles.

Lors de la manipulation du sac 1, avant utilisation, le substrat de culture 10 est correctement retenu par la paroi inférieure 11 et par la seconde feuille 14 continue en second matériau de la paroi supérieure 12.

Lors de l'utilisation, comme illustré sur la figure 4, le sac 1 est posé sur le sol 16, côte à côte avec d'autres sacs tels que le sac 17. Le sol 16 peut indifféremment être un sol en terre, une dalle de béton ou de pierre, une surface goudronnée, ou toute autre surface mécaniquement résistante. Les eaux de ruissellement dégradent rapidement la seconde feuille 14 de paroi supérieure 12 en second matériau, de sorte que ladite paroi supérieure 12 ne comprend alors plus que la première feuille 13 en premier matériau à grosses mailles. La couche de décor 18 disposée sur la paroi supérieure 12 du sac 1 est ainsi correctement retenue par la première feuille 13 en premier matériau à grosses mailles, qui évite ainsi les inconvénients des structures connues de sacs ou de tapis de culture.

Le second matériau peut être choisi pour avoir une durée de dégradation de 10 à 15 jours. On choisira de préférence un premier matériau ayant la couleur du substrat de culture 10, évitant de le rendre apparent après dégradation du second matériau. Le premier matériau et la paroi inférieure 11 peuvent être non biodégradables, pour permettre les manipulations du support de culture postérieurement à la pousse des plantes. Toutefois, selon les applications, le premier matériau et/ou la paroi inférieure 11 peuvent être biodégradables selon une durée supérieure à celle du second matériau, cette durée étant choisie suffisamment longue pour permettre les manipulations du support de culture pendant une période appropriée postérieurement à la pousse des plantes.

En fonction des types de matériaux utilisés pour la réalisation de la paroi inférieure 11 et de la paroi supérieure 12, la solidarisation des parois selon les lignes de solidarisation 3, 5 et 6 peut être effectuée par couture, par collage, par agrafage, ou par soudage.

Pour favoriser une production automatisée des sacs, on peut avantageusement choisir des moyens de solidarisation mixtes, par exemple une solidarisation par collage le long des lignes de solidarisation longitudinales intermédiaires 5 et 6 et le long des tronçons longitudinaux de la ligne de solidarisation périphérique 3, et une solidarisation ultérieure par couture le long des tronçons transversaux de la ligne de solidarisation périphérique 3.

Dans le cas d'un collage, les lignes de solidarisation longitudinales intermédiaires 5 et 6 peuvent présenter une largeur accrue, par exemple de l'ordre de 1 cm, permettant de découper le sac selon le milieu de la ligne de solidarisation sans risque d'écoulement du substrat de culture.

Dans le cas d'une couture, on peut prévoir des lignes de solidarisation longitudinales intermédiaires 5 et 6 chacune à deux coutures parallèles définissant entre elles une bande pouvant être découpée longitudinalement.

On peut avantageusement profiter des espaces libres sur les faces externes des parois du sac 1 pour y imprimer diverses inscriptions telles que mode d'emploi, prescriptions d'utilisation, précautions, marquages et autres.

La présente invention n'est pas limitée aux modes de réalisation qui ont été explicitement décrits, mais elle en inclut les diverses variantes et généralisations contenues dans les revendications ci-après.

## Revendications

1. Sac pour support modulaire de culture hors sol, le sac (1) contenant un substrat de culture (10), caractérisé en ce que :
- le sac (1) comprend une paroi inférieure (11) en un matériau retenant le substrat de culture (10) lors des manipulations et du transport,
- le sac (1) comprend une paroi supérieure (12) solidarisée à la paroi inférieure (11) selon le pourtour (2) du sac (1) et formée d'au moins deux matériaux associés comprenant un premier matériau (13) conformé en grosses mailles susceptible d'assurer une bonne tenue d'une couche de décor (18) ultérieurement déposée sur le support, et un second matériau (14) rapidement biodégradable sous l'action de l'eau et obturant temporairement les trous desdites mailles du premier matériau (13) pour retenir temporairement le substrat de culture (10) lors des manipulations et du transport du sac (1).

2. Sac pour support modulaire de culture hors sol selon la revendication 1, caractérisé en ce que la paroi supérieure (12) est formée d'au moins deux feuilles superposées comprenant une première feuille (13) à grosses mailles constituée dudit premier matériau et une seconde feuille (14) constituée dudit second matériau rapidement biodégradable.

3. Sac pour support modulaire de culture hors sol selon la revendication 2, caractérisé en ce que la première feuille (13) forme la couche externe de paroi supérieure (12).

4. Sac pour support modulaire de culture hors sol selon la revendication 2, caractérisé en ce que la seconde feuille (14) forme la couche externe de paroi supérieure (12).

5. Sac pour support modulaire de culture hors sol selon l'une quelconque des revendications 2 à 4, caractérisé en ce que la seconde feuille (14) est en papier opaque.

6. Sac pour support modulaire de culture hors sol selon l'une quelconque des revendications 2 à 5, caractérisé en ce que les deux feuilles (13, 14) sont collées l'une à l'autre.

7. Sac pour support modulaire de culture hors sol selon la revendication 1, caractérisé en ce que le premier matériau (13) conformé en grosses mailles est enrobé avec le second matériau (14) rapidement biodégradable.

8. Sac pour support modulaire de culture hors sol selon l'une quelconque des revendications 1 à 7, caractérisé en ce que la paroi supérieure (12) est imprégnée d'un engrais transférable au substrat de culture (10) par l'eau d'arrosage ou de ruissellement.

9. Sac pour support modulaire de culture hors sol selon l'une quelconque des revendications 1 à 8, caractérisé en ce que la face externe de paroi supérieure (12) comporte des repères d'implantation (15) selon un ou plusieurs maillages.

10. Sac pour support modulaire de culture hors sol selon l'une quelconque des revendications 1 à 9, caractérisé en ce que le sac (1) présente un pourtour (2) rectangulaire, les parois supérieure (12) et inférieure (11) étant solidarisées l'une à l'autre selon une ligne de solidarisation (3) périphérique légèrement en retrait du pourtour (2) pour former une bavette (4).

11. Sac pour support modulaire de culture hors sol selon la revendication 10, caractérisé en ce que les parois supérieure (12) et inférieure (11) sont en outre solidarisées l'une à l'autre selon deux lignes de solidarisation longitudinales intermédiaires (5, 6) délimitant trois compartiments (7, 8, 9) respectifs.

12. Sac pour support modulaire de culture hors sol selon la revendication 11, caractérisé en ce que l'une des parois supérieure (12) ou inférieure (11) est plus large que l'autre, de sorte que les lignes de solidarisation (3, 5, 6) se placent sensiblement dans le plan de la paroi la moins large.

13. Procédé de culture hors sol, caractérisé en ce qu'on utilise des sacs pour support modulaire de culture hors sol selon l'une quelconque des revendications 1 à 12, manipulables indépendamment les uns des autres avant et après la pousse des plantes.

## Claims

1. Bag for modular soilless growth medium, the bag (1) Containing a growth substrate (10), characterized in that :
- the bag (1) has a bottom wall (11) made of a material retaining the growth substrate (10) during handling and transportation,
- the bag (1) has a top wall (12) attached to the bottom wall (11) around the perimeter (2) of the bag (1) and formed of at least two associated materials comprising a wide-mesh first material (13) adapted to assure good retention of a decorative layer (18) subsequently placed on the medium, and a second material (14) that is rapidly biodegraded on exposure to water and temporarily blocks the holes of said mesh of the first material (13) to retain the growth substrate (10) temporarily during handling and transportation of the bag (1).

2. Bag for modular soilless growth medium according to claim 1, characterized in that the top wall (12) is formed of at least two superposed sheets comprising a wide-mesh first sheet (13) of said first material and a second sheet (14) of said rapidly biodegradable second material.

3. Bag for modular soilless growth medium according to claim 2, characterized in that the first sheet (13) forms the outside layer of the top wall (12).

4. Bag for modular soilless growth medium according to claim 2, characterized in that the second sheet (14) forms the outside layer of the top wall (12).

5. Bag for modular soilless growth medium according to any one of claims 2 to 4, characterized in that the second sheet (14) is of opaque paper.

6. Bag for modular soilless growth medium according to any one of claims 2 to 5, characterized in that the two sheets (13, 14) are glued together.

7. Bag for modular soilless growth medium according to claim 1, characterized in that the wide-mesh first material (13) is coated with the rapidly biodegradable second material (14).

8. Bag for modular soilless growth medium according to any one of claims 1 to 7, characterized in that the top wall (12) is impregnated with a fertilizer that can be transferred to the growth substrate (10) by watering or surface water.

9. Bag for modular soilless growth medium according to any one of claims 1 to 8, characterized in that the outside face of the top wall (12) has planting markings (15) in one or more grids.

10. Bag for modular soilless growth medium according to any one of claims 1 to 9, characterized in that the bag (1) has a rectangular perimeter (2), the top wall (12) and the bottom wall (11) being fastened together along a peripheral attachment line (3) slightly set in from the perimeter (2) to form a drip flap (4).

11. Bag for modular soilless growth medium according to claim 10, characterized in that the top wall (12) and the bottom wall (11) are also fastened together along two intermediate longitudinal attachment lines (5, 6) delimiting three compartments (7, 8, 9) respectively.

12. Bag for modular soilless growth medium according to claim 11, characterized in that either the top wall (12) or the bottom wall (11) is wider than the other, so that the attachment lines (3, 5, 6) are in substantially the same plane as the narrower wall.

13. Soilless growth method, characterized in that it uses bags for modular soilless growth media according to any one of claims 1 to 12 that can be handled independently of each other before and after the plants germinate.

## Patentansprüche

1. Modularer Trägersack für Kulturen außerhalb des Bodens, wobei der Sack (1) ein Nährsubstrat (10) enthält, gekennzeichnet durch die folgenden Merkmale:
- der Sack (1) hat eine untere Wand (11), die bei der Handhabung und beim Transport das Nährsubstrat (10) hält,
- der Sack (1) hat eine obere Wand (12), die über den Außenumfang (2) des Sackes (1) mit der unteren Wand (11) fest verbunden ist und aus wenigstens zwei miteinander verbundenen Werkstoffen besteht, nämlich einem ersten, grobmaschigen Material (13), das in der Lage ist, eine zusätzlich auf den Trägersack aufgebrachte, dekorative Deckschicht (18) zu halten, sowie einem zweiten Material (14), das unter dem Einfluß von Wasser biologisch rasch abbaubar ist und vorübergehend die Maschendurchbrüche des ersten Materials (13) abschließt, um dadurch das Nährsubstrat (10) während Handhabung und Transport des Sackes (1) vorübergehend zu halten.

2. Modularer Trägersack für Kulturen außerhalb des Bodens nach Anspruch 1, dadurch gekennzeichnet, daß die obere Wand (12) aus wenigstens zwei übereinander liegenden Folien besteht, nämlich einer ersten, grobmaschigen Folie (13) aus dem ersten Material und einer zweiten Folie (14), die aus dem biologisch rasch abbaubaren, zweiten Material zusammengesetzt ist.

3. Modularer Trägersack für Kulturen außerhalb des Bodens nach Anspruch 2, dadurch gekennzeichnet, daß die ersten Folie (13) die äußere Schicht der oberen Wand (12) bildet.

4. Modularer Trägersack für Kulturen außerhalb des Bodens nach Anspruch 2, dadurch gekennzeichnet, daß die zweite Folie (14) die äußere Schicht der oberen Wand (12) bildet.

5. Modularer Trägersack für Kulturen außerhalb des Bodens nach einem der Ansprüche 2 bis 4, dadurch gekennzeichnet, daß die zweite Folie (14) aus lichtundurchlässigem Papier besteht.

6. Modularer Trägersack für Kulturen außerhalb des Bodens nach einem der Ansprüche 2 bis 5, dadurch gekennzeichnet, daß die beiden Folien (13, 14) miteinander verklebt sind.

7. Modularer Trägersack für Kulturen außerhalb des Bodens nach Anspruch 1, dadurch gekennzeichnet, daß das erste, grobmaschige Material (13) von dem zweiten, biologisch rasch abbaubaren Material (14) umhüllt ist.

8. Modularer Trägersack für Kulturen außerhalb des Bodens nach einem der Ansprüche 1 bis 7, dadurch gekennzeichnet, daß die obere Wand (12) mit einem Düngemittel getränkt ist, das durch Sprühwasser oder Rieselwasser in das Nährsubstrat (10) überführbar ist.

9. Modularer Trägersack für Kulturen außerhalb des Bodens nach einem der Ansprüche 1 bis 8, dadurch gekennzeichnet, daß die Außenseite der oberen Wand (12) in einem oder mehreren Netzen angeordnete Einpflanzmarkierungen (15) aufweist.

10. Modularer Trägersack für Kulturen außerhalb des Bodens nach einem der Ansprüche 1 bis 9, dadurch gekennzeichnet, daß der Sack (1) einen rechteckigen Außenumfang (2) hat, wobei die obere Wand (12) und die untere Wand (11) miteinander über eine außen umlaufende Verbindungslinie (3) miteinander verbunden sind, die zum Außenumfang (2) leicht zurückgesetzt ist, wodurch ein Randvorsprung (4) gebildet wird.

11. Modularer Trägersack für Kulturen außerhalb des Bodens nach Anspruch 10, dadurch gekennzeichnet, daß die obere Wand (12) und die untere Wand (11) miteinander außerdem verbunden sind durch zwei innere, längsverlaufende Verbindungslinien (5, 6), die drei Abteile (7, 8, 9) voneinander trennen.

12. Modularer Trägersack für Kulturen außerhalb des Bodens nach Anspruch 11, dadurch gekennzeichnet, daß von der oberen Wand (12) und der unteren Wand (11) eine breiter als die andere ist, so daß die Verbindungslinien (3, 5, 6) im wesentlichen in der Ebene der breiteren Wand liegen.

13. Verfahren für Kulturen außerhalb des Bodens, gekennzeichnet durch den Einsatz von modularen Trägersäcken für Kulturen außerhalb des Bodens nach einem der Ansprüche 1 bis 12, die vor und nach dem Pflanzenwachstum unabhängig voneinander manipulierbar sind.
